(19) **Europäisches Patentamt / European Patent Office / Office européen des brevets**

(11) **EP 4 020 767 B1**

(12) **EUROPEAN PATENT SPECIFICATION**

(45) Date of publication and mention
of the grant of the patent:
**01.07.2026 Bulletin 2026/27**

(21) Application number: **20854793.5**

(22) Date of filing: **06.08.2020**

(51) International Patent Classification (IPC):
*H02K 3/493* (2006.01)   *B22F 1/00* (2022.01)
*B22F 3/00* (2021.01)   *B22F 3/24* (2006.01)
*C22C 38/00* (2006.01)   *H01F 1/147* (2006.01)
*H01F 1/24* (2006.01)   *H01F 1/26* (2006.01)
*H01F 41/02* (2006.01)   *H02K 15/04* (2025.01)
*B22F 9/08* (2006.01)   *C22C 1/10* (2023.01)
*C22C 32/00* (2006.01)   *C22C 38/02* (2006.01)
*C22C 38/06* (2006.01)   *C22C 38/14* (2006.01)
*C22C 38/18* (2006.01)   *H02K 1/02* (2006.01)

(52) Cooperative Patent Classification (CPC):
(C-Sets available)
**C22C 38/06; B22F 1/00; B22F 3/00; C22C 38/00;**
**C22C 38/02; C22C 38/14; C22C 38/18;**
**H01F 1/147; H01F 1/26; H01F 41/0246; H02K 1/02;**
**H02K 3/493;** B22F 9/082; B22F 2998/10;
C22C 2202/02;                                    (Cont.)

(86) International application number:
**PCT/JP2020/030213**

(87) International publication number:
**WO 2021/033567 (25.02.2021 Gazette 2021/08)**

(54) **MAGNETIC WEDGE, ROTATING ELECTRICAL MACHINE, AND METHOD FOR MANUFACTURING MAGNETIC WEDGE**

MAGNETKEIL, ELEKTRISCHE MASCHINE UND VERFAHREN ZUR HERSTELLUNG EINES MAGNETKEILS

CALE MAGNÉTIQUE, MACHINE ÉLECTRIQUE ROTATIVE ET PROCÉDÉ DE FABRICATION DE CALE MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2019   JP 2019150117**
**14.02.2020   JP 2020023466**

(43) Date of publication of application:
**29.06.2022 Bulletin 2022/26**

(73) Proprietor: **Proterial, Ltd.**
**Tokyo 135-0061 (JP)**

(72) Inventors:
• **NOGUCHI Shin**
**Tokyo 108-8224 (JP)**
• **KIKUCHI Keiko**
**Tokyo 108-8224 (JP)**
• **KIMURA Mamoru**
**Tokyo 108-8224 (JP)**
• **NISHIMURA Kazunori**
**Tokyo 108-8224 (JP)**

(74) Representative: **Becker Kurig & Partner**
**Patentanwälte mbB**
**Bavariastraße 7**
**80336 München (DE)**

(56) References cited:
**EP-A1- 2 518 738       EP-A1- 2 947 670**
**DE-B1- 2 741 362       JP-A- H07 123 622**
**JP-A- H08 172 742      JP-A- H11 238 614**
**JP-A- S5 450 807**

(52) Cooperative Patent Classification (CPC): (Cont.)
Y02P 10/25

C-Sets
B22F 2998/10, B22F 9/082, B22F 9/026,
B22F 2003/023, B22F 2003/248

**Description**

Technical Field

The present invention relates to a magnetic wedge used in a magnetic circuit of a rotating electrical machine, a rotating electrical machine using the magnetic wedge, and a method for manufacturing the magnetic wedge.

Background Art

In a general radial gap type rotating electrical machine, a stator and a rotor are disposed coaxially, and a plurality of teeth wound with coils is disposed at equal intervals in a circumferential direction on the stator around the rotor. Further, a magnetic wedge may be disposed at distal ends of the teeth on the rotor side to connect the distal ends of the adjacent teeth to each other. In this case, the magnetic wedge is used without winding the coil around the magnetic wedge itself, unlike a coil part and the like.

A magnetic flux reaching the coil from the rotor can be magnetically shielded by disposing such a magnetic wedge, and eddy current loss of the coil can be suppressed. Further, by disposing the magnetic wedge, a magnetic flux distribution (particularly, a magnetic flux distribution in the circumferential direction) in a gap between the stator and the rotor can be smoothed, and rotation of the rotor can be smoothed. It is possible to make a high-efficiency and high-performance rotating electrical machine by disposing the magnetic wedge in this way.

Further, as a conventional magnetic wedge, a magnetic wedge in which iron powder and glass cloth are solidified with an epoxy resin is known (for example, Patent Literature 1). The magnetic wedge increases electrical resistance by isolating iron powder particles from each other with an epoxy resin and increases strength by dispersing the glass cloth.

Further, as a magnetic wedge having a large relative permeability, a magnetic wedge obtained by solidifying an Fe-Si alloy powder with a resin is known (for example, Patent Literature 2).

Citation List

Patent Literature

  Patent Literature 1: Japanese Patent Laid-Open No. S62-77030 (JPS6277030A)
  Patent Literature 2: PCT International Publication No. WO 2018/008738

EP 2947670 A1 relates to a method for manufacturing a powder magnetic core using a soft magnetic material powder. EP 2518738 A1 relates to a magnetic material constituted by a grain-compacted body comprising metal grains made of an Fe-Si-M soft magnetic alloy (where M is a metal element more easily oxidized than Fe) and an oxide film formed on the surface of the metal grains.

SUMMARY OF INVENTION

Technical Problem

The magnetic wedge is desired to have a high relative permeability in order to magnetically shield the coil well, and is also desired to have high electrical resistance in order to suppress the eddy current loss due to an AC magnetic field of the coil and the rotor. In addition, since bending stress is applied to the magnetic wedge disposed in the rotating electrical machine by the AC magnetic field, it is desired to have high bending strength.

Patent Literature 1 discloses a magnetic wedge having an electrical resistivity of about $10^3$ $\Omega \cdot$cm and a three-point bending strength of about 25 kgf/mm$^2$. However, in order to meet demands of low loss and high reliability, higher resistance and higher strength have been desired.

Further, a magnetic wedge of Patent Literature 2 also has a high relative permeability and a good magnetic shielding property, but because an alloy powder is only solidified with a resin, there are problems in reliability of bending strength and so on.

Therefore, the present invention provides a magnetic wedge having high electrical resistance and bending strength, a rotating electrical machine using the magnetic wedge, and a method for manufacturing the magnetic wedge. The invention is set out in the appended set of claims. The following disclosure serves a better understanding of the present invention.

Solution to Problem

A magnetic wedge of the present invention includes a plurality of Fe-based soft magnetic particles, wherein the plurality of Fe-based soft magnetic particles contains an element M that is more easily oxidized than Fe, and are bound to each other by an oxide phase containing the element M.

Further, in the magnetic wedge, the element M is at least one of Al, Si, Cr, Zr and Hf.

Further, in the magnetic wedge, the Fe-based soft magnetic particles may be Fe-Al-Cr based alloy particles.

Further, in the magnetic wedge, an electrically insulating coating may be provided on a surface thereof.

Further, a rotating electrical machine of the present invention uses one of the magnetic wedges.

Further a method for manufacturing a magnetic wedge of the present invention includes mixing Fe-based soft magnetic particles containing an element M that is more easily oxidized than Fe, and a binder to form a mixture, pressure-molding the mixture into a molded body, and heat-treating the molded body to form a consolidated body having a surface oxide phase of the Fe-based soft magnetic particles, which binds the Fe-based soft magnetic particles, between particles of the Fe-based soft magnetic particles.

Advantageous Effects of Invention

According to the present invention, it is possible to provide a magnetic wedge having high electrical resistance and bending strength, a rotating electrical machine using the magnetic wedge, and a method for manufacturing the magnetic wedge.

BRIEF DESCRIPTION OF DRAWINGS

Fig. 1 is a schematic view of an external appearance of a magnetic wedge according to a first embodiment of the present invention.
Fig. 2 is an enlarged schematic view of a cross section of the magnetic wedge according to the first embodiment of the present invention.
Fig. 3 is an enlarged schematic view of a cross section of a magnetic wedge according to a second embodiment of the present invention.
Fig. 4 is a schematic diagram of a rotating electrical machine according to a third embodiment of the present invention.
Fig. 5 is a schematic diagram of a rotating electrical machine which is another example of the third embodiment of the present invention.
Fig. 6 is a schematic diagram of a rotating electrical machine which is still another example of the third embodiment of the present invention.
Fig. 7 is a processing flow of a method for manufacturing a magnetic wedge according to a fourth embodiment of the present invention.
Fig. 8 is a processing flow of a method for manufacturing a magnetic wedge according to a fifth embodiment of the present invention.
Fig. 9(a) is an SEM photograph illustrating a cross-sectional structure of an example, and Figs. 9(b) to 9(e) are mapping images illustrating distributions of Fe, Al, Cr and O.
Fig. 10 is a graph illustrating DC magnetization curves of an example and a comparative example.
Fig. 11 is a graph illustrating iron loss of the example.
Fig. 12 is a model diagram of a rotating electrical machine used for electromagnetic field analysis.
Fig. 13 is a graph illustrating results of the electromagnetic field analysis of the rotating electrical machine.
Fig. 14 is a graph illustrating temperature dependence of three-point bending strength of the example and the comparative example.
Fig. 15 is a graph illustrating weight loss in heating at 220 °C in the example and the comparative example.
Fig. 16 is a graph illustrating weight loss in heating at 290 °C in the example and the comparative example.

DESCRIPTION OF EMBODIMENTS

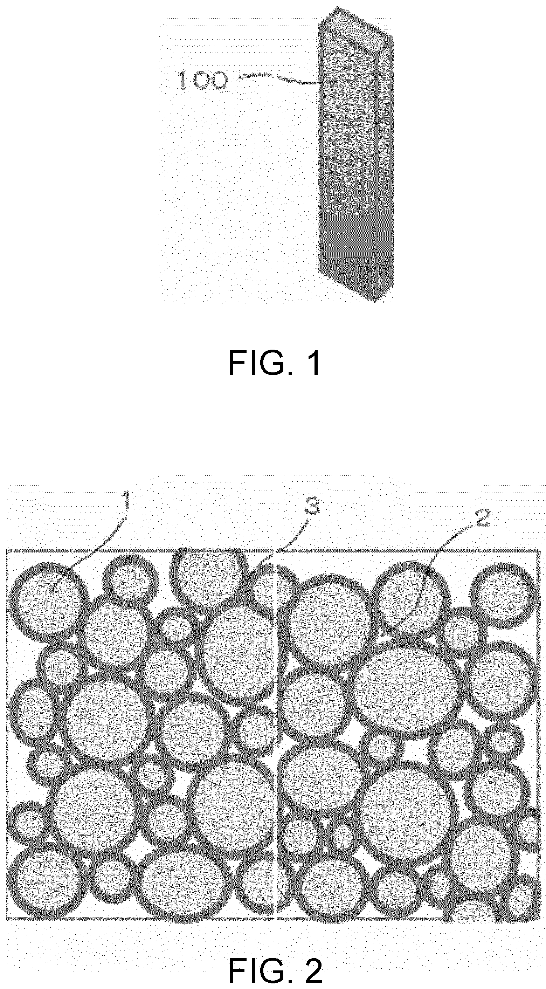

Hereinafter, embodiments of the present invention will be described in detail with reference to the drawings.
A magnetic wedge of the present invention has a plurality of Fe-based soft magnetic particles, and the plurality of Fe-based soft magnetic particles contains an element M that is more easily oxidized than Fe and are bound by an oxide phase containing the element M.
As illustrated in the schematic view of Fig. 1, the magnetic wedge 100 has, for example, a strip shape having a rectangular cross section. Further, as will be described in a later embodiment, the magnetic wedge 100 is disposed in a rotating electrical machine to connect distal ends of teeth on the rotor side and is disposed so that a longitudinal direction of the strip is parallel to a rotating shaft of the rotating electrical machine. Therefore, the shape of the magnetic wedge 100 changes according to a connection mode with the teeth, a longitudinal ridge thereof may be stepped, tapered, or notched, and a cross section thereof may be polygonal, such as trapezoidal, or irregular. Approximate dimensions of the magnetic wedge 100 are, for example, 20 mm to 300 mm in the longitudinal direction, 2 mm to 20 mm in a width direction (magnetic path direction), and 1 to 5 mm in a thickness direction.

(First embodiment)

Fig. 2 is an enlarged schematic view of a cross section of the magnetic wedge 100 of the embodiment. The magnetic wedge 100 is configured of a plurality of Fe-based soft magnetic particles, and more specifically, is a consolidated body of a plurality of Fe-based soft magnetic particles 1 containing an element M that is more easily oxidized than Fe. Further, voids 2 and a surface oxide phase 3 of Fe-based soft magnetic particles that binds Fe-based soft magnetic particles 1 to each other are provided between the particles of the consolidated body. Such a surface oxide phase is an oxide phase containing the element M.
Here, the Fe-based soft magnetic particles 1 are soft magnetic alloy particles having the highest Fe content in terms of mass ratio compared to other elements, and may be soft magnetic alloy particles containing Co or Ni. However, a content of Co or Ni must not exceed a content of Fe.
Reducing a particle size of the Fe-based soft magnetic particles 1 is advantageous for reducing eddy current loss generated in the magnetic wedge 100 itself, but when the particle size is small, production of the particles may become difficult. Therefore, in a cross-sectional observation image of the magnetic wedge 100, an average of a maximum diameter of the Fe-based soft magnetic particles 1 is preferably 0.5 μm or more and 15 μm or less, and more preferably 0.5 μm or more and 8 μm or less. Further, a particle number ratio having a maximum diameter of more than 40 μm is preferably less than 1.0%.

The average of the maximum diameters of the Fe-based soft magnetic particles 1 here is an average value of the maximum diameters of 30 or more particles which are present in a field of view of a certain area read by polishing the cross section of the magnetic wedge 100 and observing with a microscope.

Further, since the voids 2 and the surface oxide phase 3 are present between the particles of the Fe-based soft magnetic particles 1, average particle spacing of the Fe-based soft magnetic particles 1 can be widened, and electrical resistance of the magnetic wedge 100 can be increased.

In addition, relative permeability of the magnetic wedge 100 can be adjusted by adjusting a volume ratio of the void 2 and the surface oxide phase 3 with respect to the entire magnetic wedge. In other words, since the volume ratio of the voids 2 and the surface oxide phase 3 with respect to the entire magnetic wedge and a volume ratio of the Fe-based soft magnetic particles 1 (hereinafter referred to as a space factor) have a complementary relationship, the relative permeability of the magnetic wedge 100 can also be adjusted by adjusting the space factor of the Fe-based soft magnetic particles 1.

The space factor is defined as a ratio (relative density) of density of the magnetic wedge 100 with respect to true density of the Fe-based soft magnetic particles 1. The space factor can be adjusted through a molding pressure of a mixture or a heat treatment temperature of a molded body, as will be described in a later embodiment.

The relative permeability is a value μ obtained by dividing a value of magnetic flux density (unit: T) at an applied magnetic field of 160 kA/m by a value of a magnetic field (that is, 160 kA/m) and further divided by the magnetic permeability of vacuum ($4\pi \times 10^{-7}$ H/m) in a DC B-H curve of the magnetic wedge 100. Further, a value μi obtained by dividing a slope of a magnetization curve (a so-called minor loop), which is measured at an excitation level of 1/10 or less of saturation magnetic flux density of the magnetic wedge 100 and at a frequency (including direct current) of 1/10 or less of a natural resonance frequency of the magnetic wedge 100, by the magnetic permeability of vacuum ($4\pi \times 10^{-7}$ H/m) may be used as the relative permeability. The natural resonance frequency is a frequency at which an imaginary part of the relative permeability becomes the maximum, and when a plurality of maximums appears, the maximum on the lowest frequency side is adopted.

As the relative permeability of the magnetic wedge 100 becomes higher, a magnetic shielding effect is increased, and loss is reduced. On the other hand, when the relative permeability is too high, the magnetic flux does not flow from the teeth to a rotor, short-circuiting occurs between the teeth, and torque of the rotating electrical machine decreases. Such an effect depends on a thickness of the magnetic wedge 100, and the magnetic resistance can be adjusted by thinning even a magnetic wedge with a high relative permeability, and both loss reduction and torque can be achieved to some extent. Further, when the magnetic wedge 100 is too thick, a coil installation space will be pressed by that amount, which is not preferable. Since the magnetic wedge of the embodiment has high strength, it is particularly preferable to make it thin. Therefore, a thickness of the magnetic wedge 100 can be, for example, 3 mm or less.

In order to maintain the loss reduction effect due to the magnetic shield even when the thickness of the magnetic wedge 100 is 3 mm or less, the relative permeability μ of the magnetic wedge 100 is preferably 4 or more (5 or more in μi), and more preferably 7 or more (10 or more in μi). To this end, the space factor of the Fe-based soft magnetic particles 1 in the magnetic wedge 100 is preferably 30% or more, and more preferably 50% or more.

On the other hand, when the magnetic wedge 100 is made too thin, a load capacity may decrease, and strength may be insufficient. From this point of view, the thickness of the magnetic wedge 100 is preferably 0.5 mm or more, and more preferably 1 mm or more. In order to suppress a decrease in torque of the rotating electrical machine even when the thickness of the magnetic wedge 100 is 1 mm or more, the relative permeability μ of the magnetic wedge 100 is adjusted to preferably 8.0 or less (65 or less in μi) and more preferably 7.5 or less (50 or less in μi). Further, it is more preferable that the relative permeability μ be adjusted to 7.0 or less (35 or less in μi). To this end, the space factor of the Fe-based soft magnetic particles 1 in the magnetic wedge 100 is preferably less than 90%, and more preferably 85% or less. And it is more preferable that it be 80% or less.

Further, the Fe-based soft magnetic particles 1 are particles containing an element M that is more easily oxidized than Fe. Here, the "element M that is more easily oxidized than Fe" means an element in which standard Gibbs energy of an oxide thereof is lower than $Fe_2O_3$. An element satisfying this condition can be selected as the element M, but it is preferably selected from Al, Si, Cr, Zr, and Hf because it has little radical reactivity and toxicity and it is easy to manufacture the magnetic wedge 100.

A good surface oxide phase 3 that firmly binds the Fe-based soft magnetic particles 1 to each other can be easily formed by containing such an element M. Specifically, a surface oxide phase 3 in which a content of the element M is higher than that inside the Fe-based soft magnetic particles 1 can be easily formed by molding and then oxidizing a plurality of Fe-based soft magnetic particles 1. In particular, when Al is selected as the element M, a particularly good surface oxide phase 3 can be obtained, which is preferable.

Such a surface oxide phase 3 is chemically stable and has a high electrical resistance, and strongly adheres to the Fe-based soft magnetic particles 1 to form a strong surface oxide phase. That is, the Fe-based soft magnetic particles 1 can be isolated from each other to form a magnetic wedge 100 having high electrical resistance, and the Fe-based soft magnetic particles 1 can be firmly bonded to each other to form a magnetic wedge 100 having high bending strength.

Here, as the electrical resistance of the magnetic wedge 100 becomes higher, it is more preferable, and a value of volume resistivity, according to the present invention, 10 Ω·m or more, preferably 20 Ω·m or more, and more preferably 100 Ω·m or more. Additionally, it is still more preferable that it is 1000 Ω·m or more.

Further, as the bending strength of the magnetic wedge 100 becomes higher, it is more preferable, and a value of three-point bending strength is preferably 150 MPa or more, and more preferably 200 MPa or more. Additionally, it is still more preferable that it is 250 MPa or more.

Here, when the thickness of the surface oxide phase 3 is thin, electrical isolation between the particles becomes small, and the electrical resistance of the magnetic wedge 100 decreases, and the relative permeability becomes high, and there is a possibility that the relative permeability cannot be adjusted to a desired value only by adjusting a volume rate of the void 2. On the other hand, when the thickness of the surface oxide phase 3 is thick, the relative permeability may be lowered and the magnetic shielding effect may be weakened. Therefore, the thickness of the surface oxide phase 3 is preferably 0.01 to 1.0 μm, for example. In this way, it is possible to obtain a magnetic wedge 100 having high electrical resistance and bending strength and having an adjusted relative permeability.

Further, in the case in which an amount of the element M contained in the Fe-based soft magnetic particles 1 is too small, even when the Fe-based soft magnetic particles 1 are oxidized, it becomes difficult to form a good surface oxide phase 3 in which the content of the element M is higher than that inside the Fe-based soft magnetic particles 1, and in the case in which the amount of the element M contained in the Fe-based soft magnetic particles 1 is too large, a Fe concentration is reduced, and thus saturation magnetic flux density and Curie temperature of the Fe-based soft magnetic particles 1 may decrease.

Therefore, according to the present invention, the amount of the element M contained in the Fe-based soft magnetic particles 1 is 1.0% by mass or more and 20% by mass or less. In this way, a good surface oxide phase 3 can be easily formed, and the saturation magnetic flux density and the Curie temperature of the Fe-based soft magnetic particles 1 can be maintained high.

That is, the magnetic wedge 100 having high electrical resistance and bending strength and high magnetic shielding property can be obtained.

Further, not only one type of element M but also two or more types of elements M due to a combination of Al and Cr, Si and Cr may be selected. For example, two types of Al and Cr may be selected, and the Fe-based soft magnetic particles 1 may be formed of Fe-Al-Cr based alloy particles. In this way, it is possible to form a good surface oxide phase 3 in which the total content of the element M is higher than that inside the Fe-based soft magnetic particles 1 even with a relatively small amount of Al. That is, the magnetic wedge 100 having high bending strength and adjusted relative permeability can be obtained. The Fe-Al-Cr based alloy is an alloy in which the elements having the next highest content after Fe are Cr and Al (in no particular order), and other elements may be contained in a smaller amount than Fe, Cr, and Al. A composition of the Fe-Al-Cr alloy is not particularly limited, but for example, the content of Al is preferably 2.0% by mass or more, and more preferably 5.0% by mass or more. From the viewpoint of obtaining the high saturation magnetic flux density, the content of Al is preferably 10.0% by mass or less, and more preferably 6.0% by mass or less. A content of Cr is preferably 1.0% by mass or more, and more preferably 2.5% by mass or more. From the viewpoint of obtaining the high saturation magnetic flux density, the content of Cr is preferably 9.0% by mass or less, and more preferably 4.5% by mass or less.

When two or more types of elements are selected for the element M, the total content thereof is 1.0% by mass or more and 20% by mass or less, as in the case of selecting one type.

Further, the Fe-based soft magnetic particles 1 may be particles to which elements other than the element M are added. However, it is preferable to add the additive elements in a smaller amount than the element M. Further, the Fe-based soft magnetic particles 1 may be particles in which surfaces thereof have been surface-treated by a chemical method, a heat treatment, or the like. Further, the Fe-based soft magnetic particles 1 may also be composed of a plurality of types of Fe-based soft magnetic particles having different compositions.

Further, the surface oxide phase 3 may be a surface oxide phase 3 containing Fe or other elements in addition to the element M, and the concentrations of elements such as the element M and Fe and the like do not necessarily have to be uniform inside the surface oxide phase 3. That is, the concentrations of elements may be different for each grain boundary.

As described above, the magnetic wedge 100 having high electrical resistance and bending strength can be obtained by forming the magnetic wedge 100 having the Fe-based soft magnetic particles 1 and the surface oxide phase 3. With such a configuration and the void 2, the magnetic wedge 100 having high electrical resistance and bending strength and having an adjusted relative permeability can be obtained.

In a conventional magnetic wedge, since iron powder is dispersed in an epoxy resin and soft magnetic particles are bound to each other by the epoxy resin, the resin may soften, and the binding strength may decrease in an environment at a high temperature. That is, when the conventional magnetic wedge is used under a high temperature environment such as that of a rotating electrical machine, there is a possibility that a problem may occur in bending strength. On the other hand, in the magnetic wedge 100 of the embodiment, since the particles are bonded to each other by the surface oxide phase 3 instead of the resin, it is possible to suppress the decrease in the binding strength between the particles at a high temperature, and it is possible to provide the magnetic wedge 100 having high bending strength even at a high temperature. For example, a rate of decrease in the three-point bending strength when the temperature is increased from room temperature (25 °C) to 150 °C can be less than 5%, and more preferably less than 3%. Furthermore, the rate of decrease in the three-point bending strength when the temperature is increased from room temperature (25 °C) to 200 °C can be less than 10%, and more preferably less than 5%.

Further, as described above, since the conventional magnetic wedge contains a resin, there is a problem that the resin is decomposed and deteriorated when the magnetic wedge is exposed to a high temperature environment for a long time, and an irreversible decrease in strength and dimension is caused. On the other hand, in the magnetic wedge 100 without a resin of the embodiment, such a problem does not occur. Also in this respect, the magnetic wedge 100 having excellent heat resistance and long-term reliability can be provided. For example, a mass reduction rate after 1000 hours at 180 °C can be less than 0.05%, and more preferably less than 0.03%. Further, the mass reduction rate after 450 hours at 220 °C can be less than 0.1%, and more preferably less than 0.05%. Further, the mass reduction rate after 240 hours at 290 °C can be less than 1%, and more preferably less than 0.5%.

Further, although heat resistant temperature of the rotating electrical machine varies according to the application and specifications, there is a case in which the heat resistant temperature is set to 155 °C or 180 °C according to the standard. In addition, in some rotating electrical machines, there is a case in which the heat resistant temperature rises to about 200 °C. Since the magnetic wedge 100 of the embodiment can maintain excellent bending strength even at a high temperature, the magnetic wedge 100 can be suitably used for a rotating electrical machine having a maximum temperature of more than 180 °C and a rotating electrical machine having a maximum temperature of more than 200 °C for which a magnetic wedge could not be installed so far.

Further, in the magnetic wedge 100 of the embodiment, it is preferable that the consolidated body is used as a base body and an electrically insulating coating is formed on a surface thereof. In this way, the electrical resistance and the strength of the magnetic wedge 100 can be further increased, falling-off of the particles from the surface of the consolidated body is suppressed, and a highly reliable magnetic wedge 100 can be obtained. For the coating, an electrically insulating coating with a resin or an oxide is preferable to suppress eddy current loss, and for example, a powder coating with an epoxy resin, a sealing treatment coating by impregnating with a varnish or a silicon resin, or a sealing treatment coating of an inorganic material by impregnating with a metal alkoxide by a sol-gel method can be adopted. Among them, from the viewpoint of avoiding high-temperature deterioration of the resin, the sealing treatment coating of the inorganic substance by the sol-gel method is particularly preferable.

(Second embodiment)

Next, a magnetic wedge 200 which is a second embodiment of the present invention will be described. Since the magnetic wedge 200 of the embodiment and the magnetic wedge 100 of the first embodiment differ only in a particle structure of the consolidated body, the magnetic wedge 200 of the embodiment will be described only with reference to an enlarged schematic diagram. Further, since the same configuration as that in the first embodiment has the same action and effect, the same reference numerals are provided, and description thereof will be omitted.

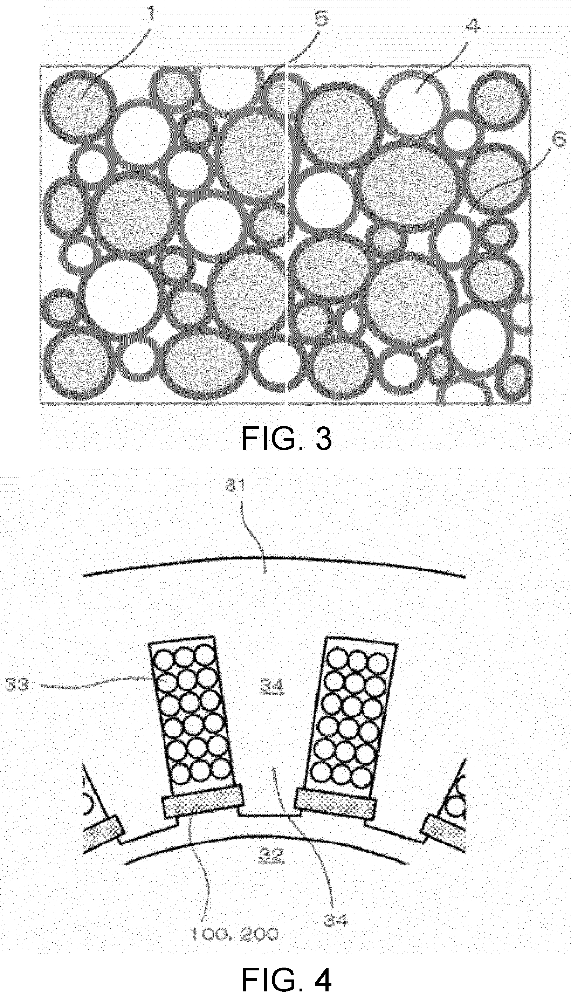

Fig. 3 is an enlarged schematic view of the magnetic wedge 200. The magnetic wedge 200 is a consolidated body of a plurality of Fe-based soft magnetic particles 1 containing an element M that is more easily oxidized than Fe, and a plurality of non-magnetic particles 4. The plurality of Fe-based soft magnetic particles is bound by an oxide phase containing the element M. In the example illustrated in Fig. 3, a surface oxide phase 5 of the particles that bind the particles together, that is, the surface oxide phase 5 of the Fe-based soft magnetic particles 1 or the non-magnetic particles 4 and voids 6 are provided between the particles of the plurality of Fe-based soft magnetic particles 1 and the plurality of non-magnetic particles 4.

The non-magnetic particles 4 are particles exhibiting non-magnetism, and the term "non-magnetic" here means that the particles are not ferromagnetic at room temperature. Specifically, the non-magnetic particles 4 mean particles exhibiting paramagnetic, diamagnetic, or antiferromagnetic magnetism at room temperature. Further, the non-magnetic particles 4 may be formed of a metal or a non-metal such as an oxide.

Additionally, since the non-magnetic particles 4 are present between the particles of the Fe-based soft magnetic particles 1, an average particle spacing of the Fe-based soft magnetic particles 1 can be widened, and the relative permeability of the magnetic wedge 200 can be reduced by an anti-magnetic field effect. That is, the magnetic wedge 200 having adjusted relative permeability can be obtained by adjusting the content of the non-magnetic particles 4.

When the particle size of the non-magnetic particles 4 is large, binding of the Fe-based soft magnetic particles 1 may be hindered, or the relative permeability may be too low. Meanwhile, when the particle size is small, production of the particles may be difficult. Therefore, in a cross-sectional observation image of the magnetic wedge 200, an average maximum diameter of the non-magnetic particles 4 is preferably 0.5 $\mu$m or more and 15 $\mu$m or less, and more preferably 0.5 $\mu$m or more and 8 $\mu$m or less. Further, a particle number ratio having a maximum diameter of more than 40 $\mu$m is preferably less than 1.0%. Thus, it is possible to obtain the magnetic wedge 200 in which the relative permeability is adjusted while the strength is maintained.

Further, an average particle size of the non-magnetic particles 4 is preferably smaller than an average particle size of the Fe-based soft magnetic particles 1. In this way, the non-magnetic particles 4 can easily enter between the particles of the Fe-based soft magnetic particles 1, a distance between the particles of the Fe-based soft magnetic particles 1 can be made more uniform, and a magnetic wedge 200 exhibiting stable magnetic characteristics can be obtained.

The type of the non-magnetic particles 4 is not particularly limited, but the non-magnetic particles 4 are preferably particles containing an element M contained in the Fe-based soft magnetic particles 1, that is, an element M that is more easily oxidized than Fe. For example, the element M selected from Al, Si, Cr, Zr, and Hf can be contained. A good surface oxide phase similar to the surfaces of Fe-based soft magnetic particles 1 can be formed on surfaces of the non-magnetic particles 4 by including such an element M, the Fe-based soft magnetic particles 1 and the particles of the non-magnetic powder or the particles of the non-magnetic powder can be firmly bonded to each other, and a magnetic wedge 200 having high bending strength can be formed.

Here, the particles of the Fe-based soft magnetic particles 1 can be isolated from each other by providing the surface oxide phase 5, and a magnetic wedge 200 having high electrical resistance can be obtained. Further, the surface oxide phase 5 is formed by joining and integrating the surface oxide phase 3 of the Fe-based soft magnetic particles 1 and the surface oxide phase of the non-magnetic particles 4, and is a phase having a different component according to the adjacent particles. However, the surface oxide phase 5 can be made into a more homogeneous surface oxide phase 5 mainly composed of the element M by containing the same element M in the Fe-based soft magnetic particles 1 and the non-magnetic particles 4. As a result, the Fe-based soft magnetic particles 1 and particles of the non-magnetic powder can be firmly bonded to each other, and a magnetic wedge 200 having high bending strength can be obtained.

Further, the non-magnetic particles 4 may be particles of the element M alone, oxide particles containing the element M, or alloy particles containing the element M. In the case of the alloy particles, Fe-based alloy particles are used preferably to increase the concentration of element M more than that in Fe-based soft magnetic particles, and thus the Curie temperature of the particles is room temperature or lower, and preferably -20 °C or lower. Then, it is more preferable to keep the Curie temperature of the particles below -100 °C.

The Fe-based alloy particles are preferably metal particles containing at least one of Al and Cr, and more preferably, two types of elements M including Al and Cr are selected to form Fe-Al-Cr based alloy particles. In this way, a good surface oxide phase 5 can be formed, and a magnetic wedge 200 having high bending strength can be obtained.

Like the magnetic wedge 100 of the first embodiment, the magnetic wedge 200 of the embodiment is a magnetic wedge 200 having high electrical resistance and bending strength and having adjusted relative permeability, but the average particle spacing of the Fe-based soft magnetic particles 1 can be adjusted without increasing the voids 2 between the particles by providing the non-magnetic particles 4. Thus, the magnetic wedge 200 having adjusted relative permeability can be obtained without impairing the bending strength. Therefore, when the magnetic wedge 100 of the first embodiment cannot achieve the desired specifications in terms of strength and the like, the magnetic wedge 200 according to the embodiment is effective.

(Third embodiment)

Next, a rotating electrical machine which is a third embodiment of the present invention will be described.

Fig. 4 is a schematic view of the rotating electrical machine and shows a cross-sectional structure perpendicular to a rotating shaft of the rotating electrical machine. The rotating electrical machine is a radial gap type rotating electrical machine, and a stator 31 and a rotor 32 are disposed coaxially. Then, a plurality of teeth 34 around which a coil 33 is wound is disposed on the stator 31 at equal intervals in the circumferential direction.

In the rotating electrical machine of the embodiment, the magnetic wedge 100 of the first embodiment or the magnetic wedge 200 of the second embodiment is disposed so that distal ends of adjacent teeth 34 are connected to distal ends of the teeth 34 on the rotor 32 side.

Here, the relative permeability and saturation magnetic flux density of the teeth 34 are usually designed to be higher than those in the magnetic wedge 100 or 200. As a result, a magnetic flux from the rotor 32 reaching the magnetic wedge 100 or 200 flows into the teeth 34 via the magnetic wedge 100 or 200, the magnetic flux reaching the coil can be suppressed, and the eddy current loss generated in the coil can be reduced. Further, when the rotating electrical machine is driven, most of the magnetic flux in the teeth 34 generated by a coil current flows into the rotor 32 with an interval, but some of the magnetic flux is attracted by the magnetic wedge and spreads in the circumferential direction. Thus, a magnetic flux distribution in a gap between the stator 31 and the rotor 32 becomes gentle, and for example, in a rotating electrical machine in which a permanent magnet is disposed in the rotor 32, cogging can be suppressed, and the eddy current loss generated in the rotor 32 can be further reduced. Also, for example, in an induction type rotating electrical machine in which a cage-shaped conductor is disposed at a rotor 32, secondary copper loss can be reduced. The loss can be reduced and the rotating electrical machine with high efficiency and high performance can be obtained by disposing the magnetic wedge 100 or 200 according to the present invention in the rotating electrical machine as described above.

Although a thickness of the magnetic wedge 100 or 200 (a dimension of the rotating electrical machine in a radial direction) can be appropriately set in consideration of the relative permeability as described above, when the thickness is too thin, the strength will be reduced and the effect as a magnetic wedge will be weakened. Therefore, the thickness is preferably 1 mm or more. On the other hand, when the thickness is too thick, the space of the coil 33 is compressed, which contributes to an increase in copper loss, and since a volume of the magnetic wedge 100 or 200 increases, the loss (iron loss) generated in the magnetic wedge itself also increases. Therefore, the thickness is preferably 5 mm or less, more preferably 3 mm or less, and still more preferably 2 mm or less.

Although a width of the magnetic wedge 100 or 200 (a dimension of the rotating electrical machine in the circumferential direction) is appropriately set according to a distance between the adjacent teeth 34, the width is preferably in a range of 2 mm to 20 mm.

Although a length of the magnetic wedge 100 or 200 (a dimension of the rotating electrical machine in an axial direction) is also basically appropriately set in consideration of a thickness of the stator 31 (a length in the axial direction), when the length is too long, it will be difficult to manufacture it, and it will be easily broken when it is mounted in the rotating electrical machine, which results in poor workability. Therefore, the length is preferably 300 mm or less, more preferably 200 mm or less, and still more preferably 100 mm or less. On the other hand, when the length is too short, a work becomes complicated when it is mounted in the rotating electrical machine, which is not preferable. From this point of view, the length is preferably 25 mm or more, and more preferably 50 mm or more.

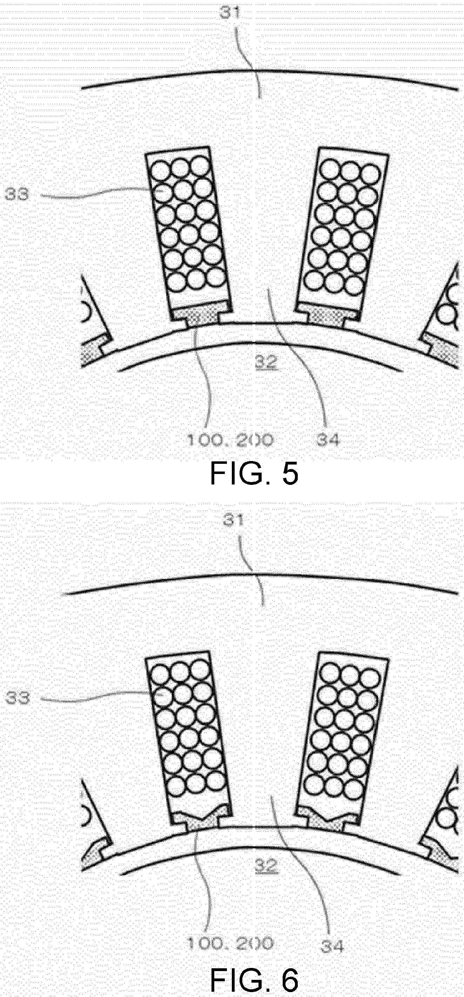

Further, a cross-sectional shape of the magnetic wedge 100 or 200 is not limited to the rectangular shape and may be various shapes. For example, as illustrated in Fig. 5, when the distal ends of the teeth 34 have a shape having protrusions in the circumferential direction, the cross-sectional shape of the magnetic wedge 100 or 200 may be a convex shape and disposed as illustrated in the drawing. Further, as illustrated in Fig. 6, a shape in which the thickness of the magnetic wedge 100 or 200 is changed in the width direction may be adopted. In this case, it is preferable to have a cross-sectional shape in which a vicinity of the center in the width direction is relatively thin. With such a shape, since a spatial distribution of the magnetic flux can be effectively smoothed at thick portions at both ends while an excessive short circuit of the magnetic flux between the teeth can be suppressed in a thin portion near the center, it is possible to achieve both torque and efficiency at a high level. As a form of the thickness change of the magnetic wedge 100 or 200, various variations such as a curved or stepwise change can be applied in addition to the linear change shown in Fig. 6.

(Fourth embodiment)

Next, a method for manufacturing a magnetic wedge which is a fourth embodiment of the present invention will be described.

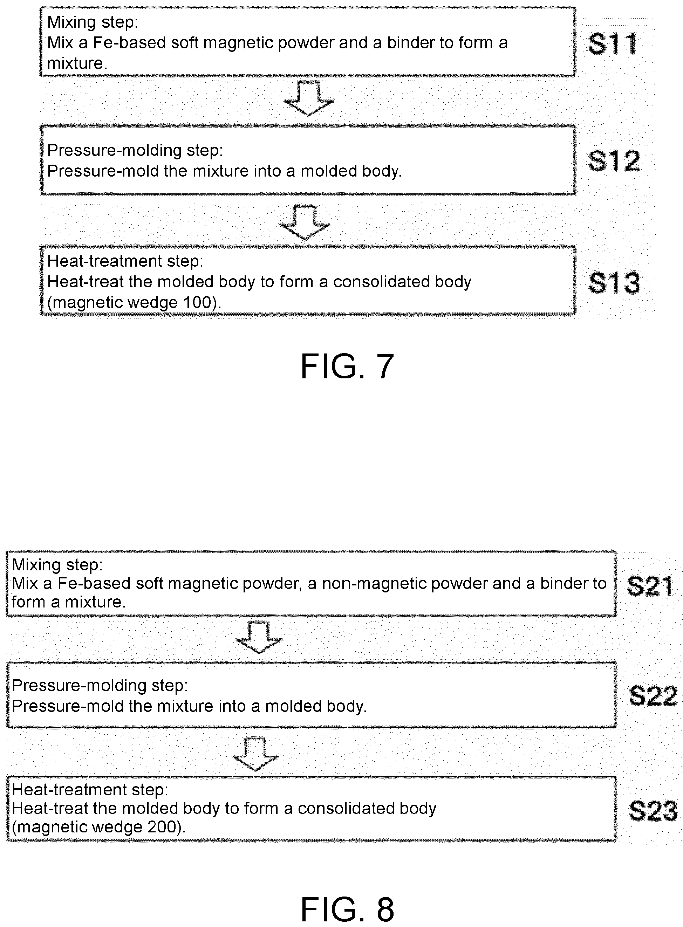

Fig. 7 is a process flow of the embodiment, and is a process flow of manufacturing the magnetic wedge 100 of the first embodiment. This process flow includes Step S11 in which a Fe-based soft magnetic powder and a binder are mixed to form a mixture, Step S12 in which the mixture is pressure-molded into a molded body, and Step S13 in which the molded body is heat-treated to form a consolidated body which will be the magnetic wedge 100.

First, in Step S11, the Fe-based soft magnetic powder and the binder are mixed to form a mixture. The Fe-based soft magnetic powder used in Step S11 is a powder that becomes the Fe-based soft magnetic particles 1 in the magnetic wedge 100. The Fe-based soft magnetic powder is a soft magnetic alloy powder mainly containing Fe, and a soft magnetic powder containing Co or Ni may also be used. In the following description, particles of the Fe-based soft magnetic powder may be referred to as the Fe-based soft magnetic particles 1.

As the Fe-based soft magnetic powder, it is preferable to use a powder having an average particle size (a median diameter d50 in a cumulative particle size distribution) of 1 $\mu$m or more and 100 $\mu$m or less, and more preferably 5 $\mu$m or more and 30 $\mu$m or less. The magnetic wedge 100 having non-magnetic particles 4 having a preferable average particle size can be manufactured using such a non-magnetic powder.

Further, as the Fe-based soft magnetic powder, a powder containing an element M that is more easily oxidized than Fe is used, and the element M **is** selected from, for example, Al, Si, Cr, Zr, and Hf. Thus, in Step S13, a good surface oxide phase 3 can be easily formed on the Fe-based soft magnetic particles 1. Specifically, the surface oxide phase 3 having a content of the element M higher than that inside the Fe-based soft magnetic particles 1 can be easily formed by oxidizing the molded body of the Fe-based soft magnetic powder.

The amount of element M contained in the Fe-based soft magnetic powder is 1.0% by mass or more and 20% by mass or less. In this way, it is possible to easily manufacture a magnetic wedge 100 having high electrical resistance and bending strength and having high magnetic shielding property.

Further, not only one type but also two or more types of elements M may be selected. For example, two types of Al and Cr may be selected, and the Fe-based soft magnetic powder may be a Fe-Al-Cr based alloy powder. Thus, it is possible to easily manufacture a magnetic wedge 100 having high bending strength and adjusted relative permeability. The Fe-Al-Cr based alloy is an alloy in which the elements having the next highest content after Fe are Cr and Al (in no particular order), and other elements may be contained in a smaller amount than Fe, Cr, and Al.

When two or more types of elements are selected as the element M, a total content thereof is 1.0% by mass or more and 20% by mass or less, as in the case of selecting one type.

Further, as the Fe-based soft magnetic powder, a powder to which an element other than the element M is added may be used. However, it is preferable to add the additive elements in a smaller amount than the element M. Further, a powder containing particles surface-treated by a chemical method, a heat treatment or the like may be used.

Further, for the Fe-based soft magnetic powder, a powder produced by a gas atomizing method or a water atomizing method may be used as a granular powder having good moldability. Further, a powder produced by a pulverization method may be used as a flat powder for the purpose of utilizing shape anisotropy.

Further, the binder is used in Step S12 to temporarily bond the particles to each other and to impart a certain degree of strength to the molded body. The binder also has the role of providing an appropriate spacing between the particles. As the binder, for example, an organic binder such as polyvinyl alcohol or acrylic can be used. Further, it is preferable to add the binder in an amount that is sufficiently thermally decomposed in Step S13 while sufficiently spreading throughout the mixture and ensuring sufficient strength of the molded body. For example, it is preferable to add only 0.5 to 3.0 parts by weight with respect to 100 parts by weight of the Fe-based soft magnetic powder.

Further, as a mixing method in Step S11, a known mixing method and mixer can be used. The mixture of the Fe-based soft magnetic powder and the binder may become agglomerated powder having a wide particle size distribution due to an adhesive action of the binder. In that case, the mixed powder may be strained through a sieve using, for example, a vibrating sieve to obtain granulated powder having a desired secondary particle size and then used in Step S12. In order to obtain granulated powder having a spherical shape and a uniform particle size, it is preferable to apply spray drying. Further, a lubricant such as stearic acid or stearate may be added to the mixture in order to reduce friction between the powder and a mold in Step S12. In that case, an addition amount is preferably 0.1 to 2.0 parts by weight with respect to 100 parts by weight of the mixed powder. The lubricant may not be added to the mixture in Step S11 and may be applied to the mold in Step S12.

Next, in Step S12, the mixture obtained in Step S11 is subjected to pressure molding. For the pressure molding, for example, a press machine and a molding die can be used. The pressure molding may be room temperature molding or warm molding in which the mixture is heated to an extent that the binder does not disappear.

Next, in Step S13, the molded body obtained in Step S12 is heat-treated to form a consolidated body that becomes a magnetic wedge.

In Step S13, due to a heat treatment of the molded body, the binder that is present between the particles of the Fe-based soft magnetic particles 1 of the molded body is thermally decomposed to form voids between the particles, and the voids 2 and the surface oxide phase 3 of the Fe-based soft magnetic particles 1 that bind the Fe-based soft magnetic particles 1 to each other are formed between the particles of the Fe-based soft magnetic particles 1 by further continuing the heat treatment.

The heat treatment may be performed in an atmosphere in which oxygen is present, such as in the atmosphere or in a mixed gas of oxygen and an inert gas. The heat treatment may also be performed in an atmosphere in which water vapor is present, such as in a mixed gas of water vapor and an inert gas.

Further, the heat treatment is performed by heating the molded body to a temperature at which the voids 2 and the surface oxide phase 3 of the Fe-based soft magnetic particles 1 that bind the Fe-based soft magnetic particles 1 to each other can be formed between the particles of the Fe-based soft magnetic particles 1. However, when the temperature of the heat treatment is low, strain applied to the molded body during molding may remain unrelaxed, and when the temperature is high, the Fe-based soft magnetic particles 1 may be sintered together, the electrical resistance may be lowered, and the magnetic wedge 100 may have large eddy current loss. Therefore, the temperature of the heat treatment is preferably in a range of 600 °C to 900 °C, and more preferably in a range of 700 to 800 °C.

In the embodiment, the relative permeability of the magnetic wedge 100 can be adjusted by adjusting a molding load in Step S12. For example, the space factor of the Fe-based soft magnetic particles 1 in the molded body, that is, the space factor of the consolidated body after Step S13 can be reduced by reducing the molding load. As a result, the average particle spacing of the Fe-based soft magnetic particles 1 in the consolidated body is widened, and the relative permeability of the magnetic wedge 100 can be adjusted to be low. From this point of view, a molding pressure is preferably less than 1.0 GPa, and more preferably 0.7 GPa or less.

Further, in the embodiment, the relative permeability of the magnetic wedge 100 can be adjusted by adjusting the temperature of the heat treatment in Step S13. For example, an amount of the surface oxide phase 3 formed between the particles of the Fe-based soft magnetic particles 1 of the molded body is reduced, and an amount of the voids 2 in the consolidated body after Step S13 is increased by lowering the temperature of the heat treatment, and thus the relative permeability of the magnetic wedge 100 can be adjusted.

In the embodiment, the particle size of the Fe-based soft magnetic alloy powder in Step S11 may be adjusted to adjust the relative permeability of the magnetic wedge 100. For example, the influence of the anti-magnetic field generated in the Fe-based soft magnetic particles 1 of the molded body can be increased using the soft magnetic alloy powder having a smaller average particle size, and thus the relative permeability of the magnetic wedge 100 can be adjusted to be low.

(Fifth embodiment)

Next, a method for manufacturing a magnetic wedge which is a fifth embodiment of the present invention will be described.

Fig. 8 is a processing flow of the embodiment, and is a processing flow of manufacturing the magnetic wedge 200 of the second embodiment. This processing includes Step S21 in which a Fe-based soft magnetic powder, a non-magnetic powder, and a binder are mixed to form a mixture, Step S22 in which the mixture is pressure-molded into a molded body, and Step S23 in which the molded body is heat-treated to form a consolidated body which will be the magnetic wedge 200.

First, in Step S21, the Fe-based soft magnetic powder, the non-magnetic powder, and the binder are mixed to form a mixture. The Fe-based soft magnetic powder provided in Step S21 is a powder that becomes the Fe-based soft magnetic particles 1 in the magnetic wedge 200 and is the same as the Fe-based soft magnetic powder described in the fourth embodiment. In the following description, the particles of Fe-based soft magnetic powder may be referred to as Fe-based soft magnetic particles 1, and the particles of non-magnetic powder may be referred to as non-magnetic particles 4.

As the non-magnetic powder, it is preferable to use a powder having an average particle size (a median diameter d50 in a cumulative particle size distribution) of 1 $\mu$m or more and 80 $\mu$m or less, and more preferably 3 $\mu$m or more and 20 $\mu$m or less. The magnetic wedge 200 having non-magnetic particles 4 having a preferable average particle size can be manufactured using such a non-magnetic powder.

Further, as the non-magnetic powder, it is preferable to use a powder having a particle size smaller than the average particle size of the Fe-based soft magnetic powder. In this way, when the mixture is prepared, the non-magnetic particles 4 are easily dispersed between the particles of the Fe-based soft magnetic particles 1, a distance between the particles of the Fe-based soft magnetic particles 1 is made more uniform, and the magnetic wedge 200 exhibiting stable magnetic properties can be easily manufactured.

Further, as the non-magnetic powder, an element M contained in the Fe-based soft magnetic powder, that is, a powder containing an element M that is more easily oxidized than Fe is used, and the element M is preferably selected from, for example, Al, Si, Cr, Zr, and Hf. In this way, the magnetic wedge 200 having high bending strength can be easily fabricated.

Further, a powder of the element M alone may be used, or an alloy powder containing the element M may be used as the non-magnetic powder. When the alloy powder is used, it is preferable to use a Fe-based alloy powder which is a powder having a high content of element M so that the Curie temperature is below room temperature.

Further, for example, two types of elements M including Al and Cr may be selected, and a Fe-Al-Cr based alloy powder may be used as the Fe-based alloy powder. In this way, the magnetic wedge 200 having high bending strength can be easily manufactured.

Further, as the non-magnetic powder, a powder to which an element other than the element M is added may be used. Further, a powder containing particles surface-treated by a chemical method, a heat treatment or the like may be used.

Further, for the non-magnetic powder, a powder produced by a gas atomizing method or a water atomizing method can be used as a granular powder having good moldability. Further, a powder produced by a pulverization method can be used as a flat powder for the purpose of utilizing shape anisotropy.

Further, as the binder used in Step S21, an organic binder such as polyvinyl alcohol or acrylic may be used in Step S22 in order to temporarily bond the particles to each other at appropriate intervals and to impart strength to the molded body. Further, it is preferred to add the binder in an amount that is sufficiently thermally decomposed in Step S23 while sufficiently spreading throughout the mixture and ensuring sufficient strength of the molded body. For example, it is preferred to add only 0.5 to 3.0 parts by weight with respect to 100 parts by weight of the total of the Fe-based soft magnetic powder and non-magnetic powder.

Further, as a mixing method in Step S21, the same mixing method as in Step S11 of the fourth embodiment can be used. The same applies to the amount of the added lubricant.

Next, in Step S22, the mixture obtained in Step S21 is subjected to pressure molding, for which the same pressure molding as in Step S12 of the fourth embodiment can be used.

Next, in Step S23, the molded body obtained in Step S22 is heat-treated to form a consolidated body that becomes a magnetic wedge. When non-magnetic particles 4 made of a metal are used as the non-magnetic particles 4, the non-magnetic particles 4 may be plastically deformed when the consolidated body is formed, and thus the strength of the magnetic wedge 200 may be increased.

In Step S23, the binder that is present between the particles in the molded body is thermally decomposed to form voids 6 between the particles by heat-treating the molded body, and the surface oxide phase 5 of the particles that binds the particles to each other is formed between the particles by further continuing the heat treatment. For the heat treatment, the same method as in Step S13 of the fourth embodiment can be used.

In the embodiment, the relative permeability of the magnetic wedge 200 can be adjusted by adjusting a mixing ratio of the non-magnetic powder in Step S21. For example, the average particle spacing of the Fe-based soft magnetic particles 1 in the consolidated body after Step S23 can be increased by increasing the mixing proportion of the non-magnetic powder, and thus the relative permeability of the magnetic wedge 200 can be adjusted to be low.

Further, in the embodiment, a molding load in Step S22 may be adjusted to adjust the relative permeability of the magnetic wedge 200. For example, an amount of voids between the particles of the Fe-based soft magnetic particles 1 in the molded body, that is, the amount of voids in the consolidated body after Step S23 is increased by reducing the molding load, the average particle spacing of the Fe-based soft magnetic particles 1 in the consolidated body after Step S23 can be increased, and thus the relative permeability of the magnetic wedge 200 can be adjusted to be low.

Further, in the embodiment, the temperature of the heat treatment in Step S23 may be adjusted to adjust the relative permeability of the magnetic wedge 200. For example, an amount of the surface oxide phase 3 formed between the particles of the Fe-based soft magnetic particles 1 of the molded body is reduced and an amount of the voids 6 in the consolidated body after Step S23 is increased by lowering the temperature of the heat treatment, the average particle spacing of the Fe-based soft magnetic particles 1 in the consolidated body after Step S23 can be increased, and thus the relative permeability of the magnetic wedge 200 can be adjusted to be low.

In the embodiment, the particle size of the Fe-based soft magnetic alloy powder in Step S11 may be adjusted to adjust the relative permeability of the magnetic wedge 100. For example, the influence of the anti-magnetic field generated in the Fe-based soft magnetic particles 1 of the molded body is increased using the soft magnetic alloy powder having a small average particle size, and thus the relative permeability of the magnetic wedge 100 can be adjusted to be low.

**Examples**

Hereinafter, an example of the first embodiment using the Fe-Al-Cr based alloy as the Fe-based soft magnetic particles will be described. However, materials, blending amounts, and the like described in this example are not intended to limit the scope of the present invention to those alone unless otherwise specified.

(Preparation method of sample)

An alloy powder of Fe-5% Al-4% Cr (% by mass) was prepared by a high-pressure water atomizing method. Specific preparation conditions are as follows. A tapping temperature was 1650 °C (a melting point 1500 °C), a diameter of a molten metal nozzle was 3 mm, a tapping discharge rate was 10 kg/min, a water pressure was 90 MPa, and a water volume was 130 L/min. Melting and tapping of raw materials were performed in an Ar atmosphere. An average particle size (a median diameter) of the prepared powder was 12 $\mu$m, a specific surface area of the powder was 0.4 $m^2$/g, true density of the powder was 7.3 $g/cm^3$, and a content of oxygen of the powder was 0.3%.

Polyvinyl alcohol (PVA) and ion-exchanged water were added to this raw material powder to prepare slurry, and the slurry was spray-dried with a spray dryer to obtain granulated powder. Assuming that the raw material powder is 100 parts by weight, an amount of PVA added is 0.75 parts by weight. Zinc stearate was added to the granulated powder at a ratio of 0.4 parts by weight and mixed. This mixed powder was filled in a mold and press-molded at room temperature at a molding pressure of 0.9 GPa. A prepared molded body was heat-treated in the air at 750 °C for 1 hour. A temperature increase rate at this time was 250 °C/h. An amount of oxygen contained in the consolidated body after the heat treatment was 2%.

Dimensions of the prepared sample are as follows.

> Sample for evaluation of bending strength and heating loss: width 2.0 mm×length 25.5 mm×thickness 1.0 mm.
> Sample for DC magnetization curve evaluation: 10 mm square×thickness 1.0 mm.
> Sample for evaluation of magnetic core loss/electrical resistance: outer diameter 13.4 mm×inner diameter 7.7 mm×thickness 2.0 mm (ring shape).

(Cross-sectional structure of Examples)

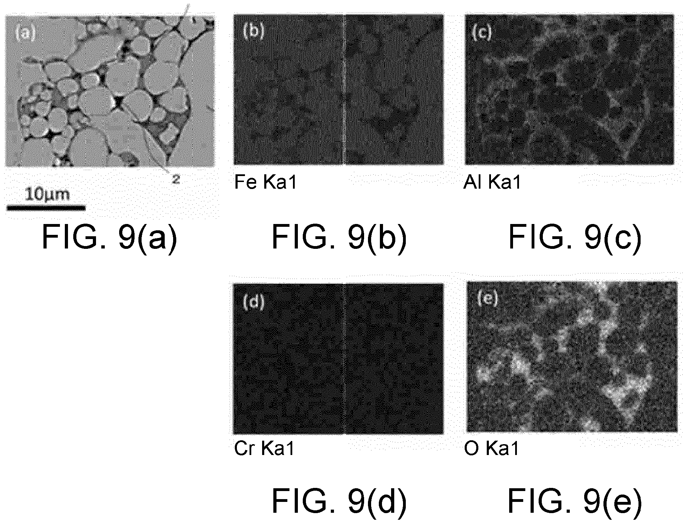

For the example prepared as described above, cross-sectional observation was performed using a scanning electron microscope (SEM/EDX), and at the same time, a distribution of each of constituent elements was investigated. Results thereof are illustrated in Fig. 9. Fig.

9(a) is an SEM image, and Figs. 9(b) to 9(e) are mapping images illustrating a distribution of each of Fe (iron), Al (aluminum), Cr (chromium), and O (oxygen). As a color becomes brighter, the more target elements are present. From Fig. 9, it can be seen that aluminum and oxygen are abundant at grain boundaries between the Fe-based soft magnetic particles and an oxide phase is formed. Furthermore, it can be seen that the soft magnetic particles are bonded to each other via the oxide phase.

(Comparative example)

As a comparative example, a magnetic laminated plate which is formed of a commercially available magnetic wedge material was used. This magnetic wedge was obtained by dispersing iron powder in a glass epoxy substrate and was used by cutting out a size required for various measurements from a plate material having a thickness of 3.2 mm.

(Density and electrical resistance)

Sample density of the above example was 6.4 g/cm$^3$. A space factor (a relative density) which is a value obtained by dividing the sample density by the true density of the powder was 88%. Meanwhile, a density of the comparative example was 3.7 g/cm$^3$.

Further, electrical resistivity of the example measured using the above ring-shaped sample was $3 \times 10^4$ Ω·m. For the electrical resistivity, a conductive adhesive is applied to two opposite flat surfaces of the ring-shaped sample to form an electrode, and the electrical resistivity ρ (Ω·m) was calculated by the following Equation using a resistance value R (Ω) at the time of applying 50 V measured by a digital ultra-high resistance tester R8340 manufactured by Advantest Co.

$$\rho\ (\Omega{\cdot}m)=R{\times}A/t$$

Here, A is an area (m$^2$) of the flat surface of the ring-shaped sample, and t is a thickness (m) of the sample.

Meanwhile, since the electrical resistance of the comparative example was too low to be measured by the above-described ultra-high electrical resistance meter, the electrical resistance was measured using a resistance meter RM3545 manufactured by Hioki Electric Co. The sample used for the measurement was obtained by forming electrodes on both surfaces of a plate material cut into a 10 mm square. When a probe of the resistance meter was pressed against the electrode to measure the electrical resistance value in a plate thickness direction and the electrical resistivity of the comparative example was calculated from the above Equation, it was $9 \times 10^{-3}$ Ω·m.

(DC magnetization curve)

The DC magnetization curve (a B-H curve) of the sample was measured using with a DC self-recording magnetic flux meter (TRF-5AH manufactured by Toei Kogyo Co., Ltd.) in a state in which the 10 mm square sample is sandwiched between magnetic poles of an electromagnet and a maximum applied magnetic field of 500 kA/m is applied.

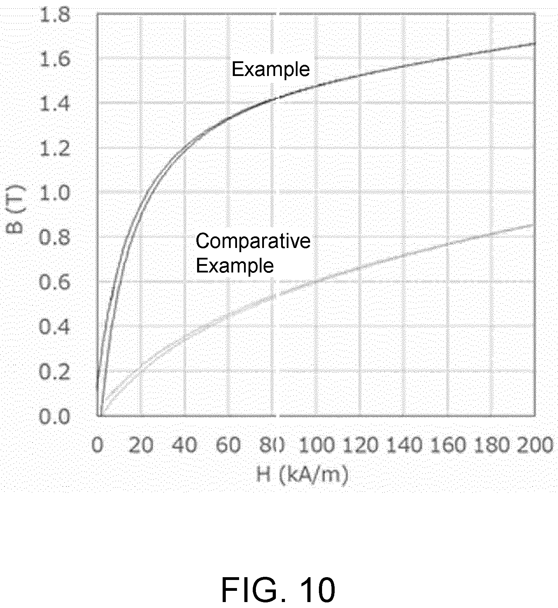

Measurement results thereof at room temperature are illustrated in Fig. 10. The drawing also illustrates the B-H curve of the comparative example. A value of the magnetic flux density at the applied magnetic field of 160 kA/m was 1.60 T in the example and 0.76 T in the comparative example. Therefore, the relative permeability μ was 8.0 in the example and 3.8 in the comparative example.

Further, the relative permeability μi of the sample obtained from an AC magnetization curve (a minor loop) measured at f=1 kHz and Bm=0.07 T was 59. A natural resonance frequency of the example was 150 MHz. The magnetic core loss of the comparative example was also tried to be measured by the same method, but the magnetic permeability was too low, and it was difficult to measure.

(Magnetic core loss)

The ring-shaped sample of the example was subjected to primary winding and secondary winding using a polyurethane-coated copper wire. The number of turns was 50 turns on both the primary side and the secondary side. This sample was connected to a B-H analyzer (BH-550 manufactured by IFG) equipped with a high current bipolar power supply (BP4660 manufactured by NF Circuit Design Block) to measure iron loss Pcv. The measurement conditions were frequency f=50 Hz to 1 kHz and maximum magnetic flux density Bm=0.05 to 1.55 T. In order to prevent a temperature increase of the sample due to Joule heat of the primary winding, the sample was immersed in a cooling tank (a high and low temperature circulator FP50-HE manufactured by Julabo) in which temperature of the refrigerant was maintained at 23 °C, and the iron loss was measured. Silicone oil (KF96-20cs manufactured by Shin-Etsu Chemical Co., Ltd.) was used as the refrigerant.

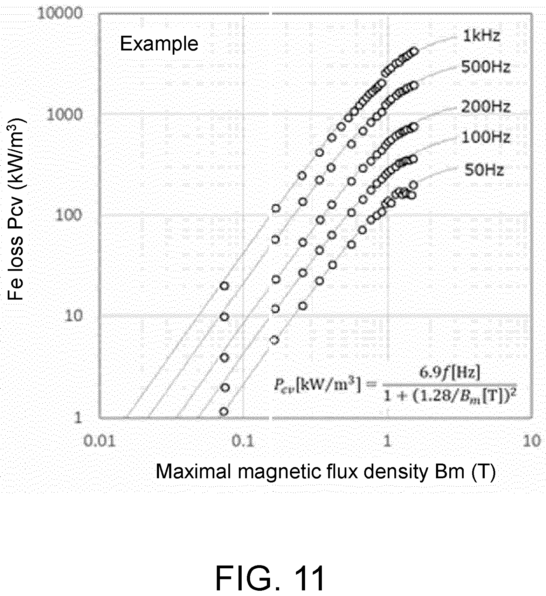

Measurement results thereof are illustrated in Fig. 11. White circles in the drawing are measured values. As illustrated in the drawing, in a region in which Bm is high, Pcv tends to be gradually saturated because it approaches magnetic saturation. In a motor characteristic simulation in the next section, this measured value was used as the iron loss in the example. Although it was possible to measure up to Bm=1.55 T in the actual measurement, the magnetic wedge inside the motor may be magnetized to about 2 T which corresponds to saturation magnetic flux density of a magnetic steel sheet. Therefore, for the Pcv value on the high Bm side which exceeds 1.55 T, the measurement result was applied to the following Equation by the least squares method, and an extrapolation value of this Equation was used.

Example: $Pcv=6.9f /(1+(1.28/Bm)^2)$

Here, the unit of Pcv is $kW/m^3$, the unit of Bm is T, and the unit of f is Hz. Solid line in Fig. 11 are calculated values of this Equation.

The iron loss of the comparative example was also measured by the same method as above. The sample used for the measurement had a ring shape with an outer diameter of 20 mm, an inner diameter of 14 mm, and a thickness of 3.2 mm, and both the primary winding and the secondary winding were wound with 85 turns. Since the magnetic permeability of the comparative example was lower than that of the example, the maximum magnetic flux density Bm that could be measured was up to 0.6 T, but the measured value was about twice the Pcv of the example. In the motor characteristic simulation in the next section, this measured value was used as the iron loss in the comparative example. For the Pcv value at Bm>0.6 T, the measurement results were applied to the following Equation in the same manner as in the example, and an extrapolation value of this Equation was used.

Comparative example: $Pcv=6.7f/(1+(1.1/Bm)^{1.58})$

(Characteristic simulation of rotating electrical machine)

Characteristics (efficiency and torque) when the magnetic wedge of the example or the comparative example was mounted in an induction type rotating electrical machine were calculated using an electromagnetic field simulation by a finite element method. At that time, a magnetization curve of Fig. 10 and the iron loss value described in the previous section were incorporated into the calculation as magnetic characteristics of the magnetic wedge 100.

The specifications of the induction type rotating electrical machine used for the electromagnetic field simulation are as follows:

Stator: diameter 450 mm×Height 162 mm

Number of poles: 4        Number of slots: 36

Material of rotor and stator: Electrical steel sheet (50 A1000)

Output of rotating electrical machine: 150 kW Rotation speed: 1425 rpm

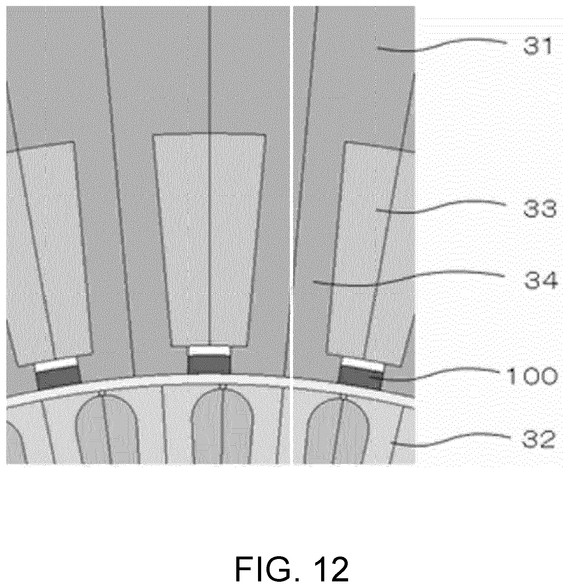

Fig. 12 illustrates a mounting position of the magnetic wedge 100 used in this simulation. The calculation was performed in a state in which a width (a length of the rotating electrical machine in the circumferential direction) of the magnetic wedge was 7.0 mm, and a thickness (a length of the rotating electrical machine in the radial direction) was changed to 0.0 mm (without the magnetic wedge), 1.5 mm, and 3.0 mm.

(Simulation result of characteristics of rotating electrical machine)

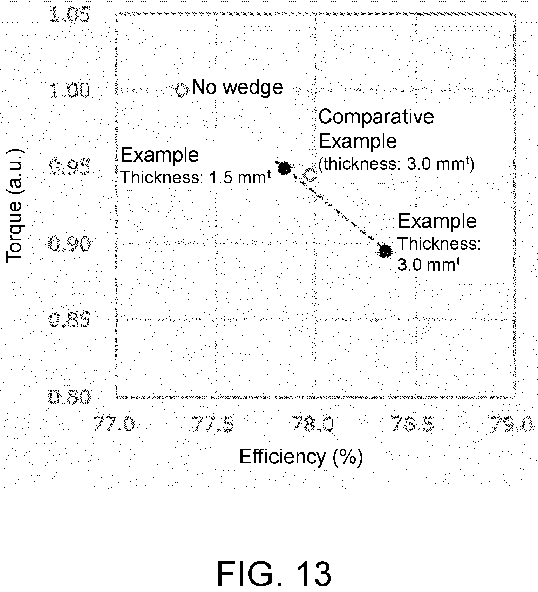

Fig. 13 illustrates results of the electromagnetic field simulation. In this drawing, the calculation results are plotted with efficiency of the rotating electrical machine on the horizontal axis and torque of the rotating electrical machine on the vertical axis. The torque on the vertical axis indicates a value standardized by the torque value when there is no magnetic wedge. When the example having a thickness of 3 mm and the comparative example were compared, high efficiency was obtained in the example, but the torque was lower than that in the comparative example. It is considered that this is because a magnetic flux short circuit between the teeth became larger in the example having high relative permeability than in the comparative example. Therefore, when the thickness of the example was reduced to 1.5 mm for the purpose of suppressing the magnetic flux short circuit, the same efficiency and torque as those in the comparative example were obtained.

As described above, it is possible to improve the efficiency while suppressing a decrease in the torque by using the example having high magnetic permeability for the magnetic wedge 100 and adjusting the thickness of the magnetic wedge 100 to be thin. Moreover, although not included in the electromagnetic field simulation, as the magnetic wedge 100 becomes thinner, a space of the coil 33 increases by that amount, thus the electrical resistance of the coil can be reduced by increasing a diameter of a coil wire or the like, and further improvement in efficiency can be expected.

(Temperature dependence of bending strength)

The three-point bending strength was measured from room temperature to 200 °C using the above-described rod-shaped sample and a universal testing machine (Type 5969 manufactured by Instron Co.). The measurement conditions were a load cell capacity of 500 N, a fulcrum diameter of 4 mm, an indenter diameter of 10 mm, a distance between fulcrums of 16 mm, and a test speed of 0.5 mm/min. From a load W (N) at the time of breaking, the three-point bending strength σ was calculated by the following Equation.

$$\sigma=3LW/(2bh^2)$$

Here, L is the distance between the fulcrums, b is the width of the sample, and h is the thickness of the sample.

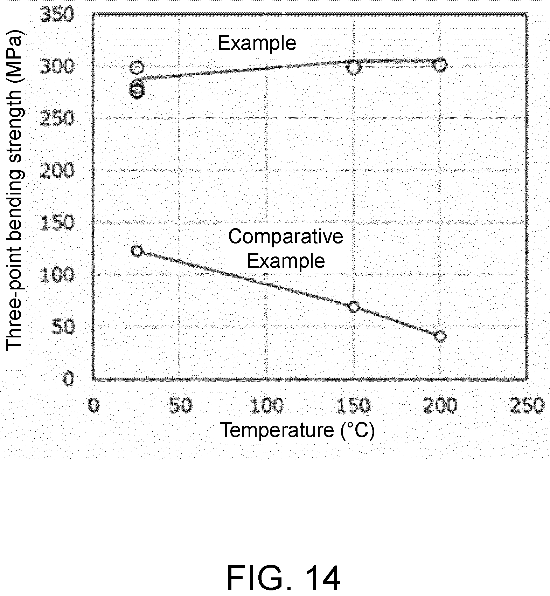

Fig. 14 illustrates the three-point bending strength of the example obtained as described above. The drawing also illustrates the three-point bending strength of the comparative example. As illustrated in the drawing, while the three-point bending strength of the comparative example containing the resin is significantly reduced by the temperature increase, in the example without the resin of the embodiment, the strength does not decrease even at a high temperature of 200 °C, and the high strength equivalent to that at room temperature is maintained.

(Heating loss)

Since internal temperature of a motor increases when the motor is driven, the magnetic wedge is required to have durability in which characteristics thereof are not deteriorated even when the magnetic wedge is exposed to a high temperature environment for a long time. In order to evaluate this durability, a mass change (heating loss) due to aging was measured using the above-described rod-shaped sample. The aging was performed in air at 220 °C and 290 °C, and the sample was taken out and cooled at regular time intervals, and mass measurement was performed at room temperature. Here, the reason why the heating temperature is set to 220 °C and 290 °C is as follows. 220 °C is the maximum temperature that the internal temperature of the motor can reach, and 290 °C is for performing an accelerated test for heating loss. An electronic balance (AUW220D manufactured by Shimadzu Corporation) with a minimum display of 0.01 mg was used for mass measurement. Since the rod-shaped sample of the example has a small mass of about 0.3 g, the number of samples was set to 5 to ensure reliability of the measurement.

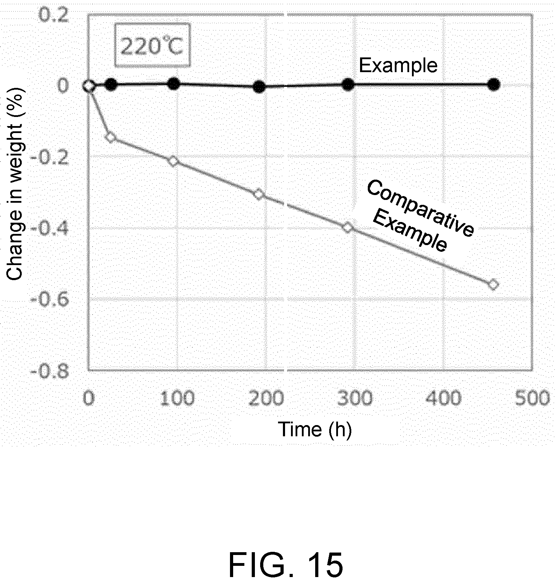

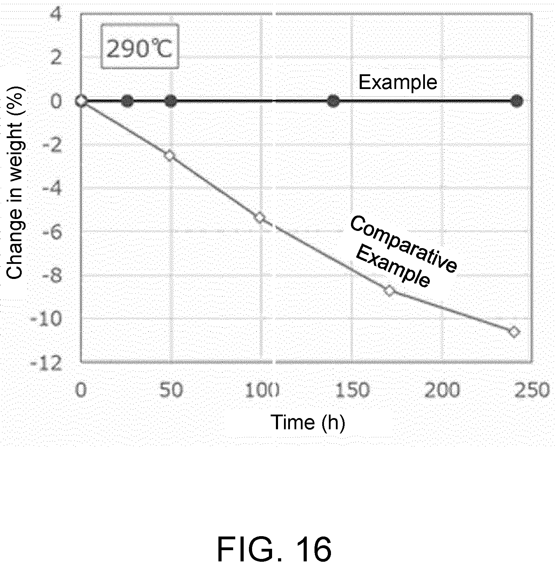

The measurement result at 220 °C is illustrated in Fig. 15, and the measurement result at 290 °C is illustrated in Fig. 16. In each of the drawings, data of the example is an average value of five samples. The drawing also illustrates the measurement results of the comparative example. In the case of 220 °C, a weight of the comparative example decreased by 0.56% after 456 hours, whereas a change in a weight of the example was less than 0.05%. At 290 °C, a difference in the change of the weight became remarkable, and after 240 hours, a decrease in the weight of the comparative example was 10% or more, whereas the change in the weight of the example was also less than 0.05%.

Further, when the three-point bending strength was measured after aging at 290 °C, in the example, there was no change in the bending strength from that before aging, whereas in the comparative example, the strength was so low that it could be broken just by holding it by hand.

As described above, it can be said that this example is superior in durability to aging at high temperature for a long time as compared with the comparative example and is a more practical material as a magnetic wedge.

(Thermal conductivity)

When the thermal diffusivity of the example and the comparative example at room temperature was measured with a thermal diffusivity measuring device (LFA467 manufactured by Netzsch Co.), the example was 3.4 mm$^2$/s, and the comparative example was 0.8 mm$^2$/s. Further, when specific heat of the example and the comparative example at room temperature was measured with a differential scanning calorimeter (DSC404F1 manufactured by Netzsch Co.), the example was 0.4 J/(g·K), and the comparative example was 0.5 J/(g·K). When thermal conductivity was obtained by multiplying the thermal diffusivity, the specific heat, and the above-described density, the example was 8.7 W/(m·K), the comparative example was 1.5 W/(m·K), and the example had thermal conductivity about 6 times higher than that of the comparative example. In general, since the thermal conductivity of a resin is as low as 1/10 or less of that of a metal, it is considered that the high thermal conductivity of this example is due to the characteristic of being resin-less. Heat can be effectively dissipated by disposing this example which has high thermal conductivity and excellent heat dissipation as a magnetic wedge near a gap which is a heat generation source, and an effect of improving cooling efficiency of the rotating electrical machine is also expected. Such a cooling effect is preferable as the thermal conductivity of the magnetic wedge is higher, for example, the thermal conductivity is preferably 2.0 W/(m·K) or more, more preferably 5.0 W/(m·K) or more, and even more preferably 8.0 W/(m·K) or more. Further, since the thermal conductivity of the electromagnetic steel sheet constituting the stator of the rotating electrical machine is generally as high as about 20 W/(m·K), it can be expected that as the thermal conductivity of the magnetic wedge is closer to this value, the cooling effect increases. Therefore, the thermal conductivity of the magnetic wedge is preferably 1/10 or more, more preferably 1/5 or more, and further preferably 1/3 or more of the magnetic material (the electrical steel sheet) constituting the stator.

From the above, according to the present invention, since the particles constituting the magnetic wedge are bound by the surface oxide phase, it is possible to provide a magnetic wedge having high electrical resistance and bending strength. Further, it becomes possible to provide a magnetic wedge having high electrical resistance and bending strength and having adjusted relative permeability by adding voids to the configuration. Further, since the magnetic wedge of the present invention is made of no resin, it can be a magnetic wedge having excellent heat resistance, heat dissipation and long-term reliability.

Although the present invention has been described above using the above-described embodiment, the technical scope of the present invention is not limited to the above-described embodiment. The contents can be changed within the technical scope described in the claims.

[Reference Signs List]

1: Fe-based soft magnetic particle
2: Void
3: Surface oxide phase
4: Non-magnetic particle
5: Surface oxide phase
6: Void
31: Stator
32: Rotor
33: Coil
34: Teeth
100, 200: Magnetic wedge
S11, S12, S13, S21, S22, S23: Step

**Claims**

1.  A magnetic wedge (100, 200) comprising:

    a plurality of Fe-based soft magnetic particles (1),
    wherein the plurality of Fe-based soft magnetic particles (1) contains an element M that is more easily oxidized than Fe, and are bound to each other by a surface oxide phase (3, 5) containing the element M, wherein the element M is at least one selected from the group consisting of Al, Si, Cr, Zr and Hf,
    a value of volume resistivity of the magnetic wedge is 10 $\Omega \cdot$m or more, and
    an amount of the element M contained in the Fe-based soft magnetic particles is 1.0% by mass or more and 20% by mass or less.

2.  The magnetic wedge (100, 200) according to claim 1, wherein the Fe-based soft magnetic particles (1) are Fe-Al-Cr-based alloy particles.

3.  The magnetic wedge (100, 200) according to claim 1 or 2, wherein an electrically insulating coating is provided on a surface thereof.

4.  A rotating electrical machine using the magnetic wedge (100, 200) according to any one of claims 1 to 3.

5.  A method for manufacturing a magnetic wedge (100, 200), the method comprising:

    mixing Fe-based soft magnetic particles (1) containing an element M that is more easily oxidized than Fe, and a binder to form a mixture;
    pressure-molding the mixture into a molded body; and
    heat-treating the molded body to form a consolidated body having a surface oxide phase (3, 5) of the Fe-based soft magnetic particles (1) between the Fe-based soft magnetic particles (1), wherein the surface oxide phase (3, 5) binds the Fe-based soft magnetic particles (1), wherein the element M is at least one selected from the group consisting of Al, Si, Cr, Zr and Hf,
    a value of volume resistivity of the magnetic wedge is 10 $\Omega \cdot$m or more, and
    an amount of the element M contained in the Fe-based soft magnetic particles is 1.0% by mass or more and 20% by mass or less.

**Patentansprüche**

1.  Magnetischer Nutkeil (100, 200), umfassend:

    eine Vielzahl von weichmagnetischen Partikeln auf Fe-Basis (1),
    wobei die Vielzahl weichmagnetischer Partikel auf Fe-Basis (1) ein Element M enthält, das leichter oxidiert als Fe, und die weichmagnetischen Partikel auf Fe-Basis (1) durch eine das Element M enthaltende Oberflächenoxidphase (3, 5) miteinander verbunden sind, wobei das Element M mindestens eines aus der Gruppe bestehend aus Al, Si, Cr, Zr und Hf ist,
    ein Wert des spezifischen Volumenwiderstands des magnetischen Nutkeils 10 $\Omega \cdot$m oder mehr beträgt und
    eine Menge des in den weichmagnetischen Partikeln auf Fe-Basis enthaltenen Elements M 1,0 Massenprozent oder mehr und 20 Massenprozent oder weniger beträgt.

2.  Magnetischer Nutkeil (100, 200) nach Anspruch 1, wobei die weichmagnetischen Partikel auf Fe-Basis (1) Partikel aus einer Legierung auf Fe-Al-Cr-Basis sind.

3.  Magnetischer Nutkeil (100, 200) nach Anspruch 1 oder 2, wobei auf seiner Oberfläche eine elektrisch isolierende Beschichtung vorgesehen ist.

4.  Rotierende elektrische Maschine, die den magnetischen Nutkeil (100, 200) gemäß einem der Ansprüche 1 bis 3 verwendet.

5.  Verfahren zur Herstellung eines magnetischen Nutkeils (100, 200), wobei das Verfahren umfasst:

    Mischen von weichmagnetischen Partikeln auf Fe-Basis (1), die ein Element M enthalten, das leichter oxidiert als Fe, mit einem Bindemittel, um eine Mischung zu bilden;
    Formpressen der Mischung zu einem Formkörper; und

Wärmebehandeln des Formkörpers, um einen verdichteten Körper zu bilden, der eine Oberflächenoxidphase (3, 5) der weichmagnetischen Partikel auf Fe-Basis (1) zwischen den weichmagnetischen Partikeln auf Fe-Basis (1) aufweist, wobei die Oberflächenoxidphase (3, 5) die weichmagnetischen Partikel auf Fe-Basis (1) bindet, wobei das Element M mindestens eines ist, das aus der Gruppe ausgewählt ist, die aus Al, Si, Cr, Zr und Hf besteht,

ein Wert des spezifischen Volumenwiderstands des magnetischen Nutkeils 10 $\Omega \cdot$m oder mehr beträgt und

eine Menge des in den weichmagnetischen Partikeln auf Fe-Basis enthaltenen Elements M 1,0 Massenprozent oder mehr und 20 Massenprozent oder weniger beträgt.

le moulage sous pression du mélange en un corps moulé ; et

le traitement thermique du corps moulé pour former un corps consolidé comportant une phase d'oxyde superficielle (3, 5) des particules magnétiques douces à base de Fe (1) entre les particules magnétiques douces à base de Fe (1), dans lequel la phase d'oxyde superficielle (3, 5) lie les particules magnétiques douces à base de Fe (1), dans lequel l'élément M est au moins un élément choisi parmi le groupe constitué de Al, Si, Cr, Zr et Hf,

la résistivité volumique de la cale magnétique est de 10 $\Omega \cdot$m ou plus, et

la quantité de l'élément M contenue dans les particules magnétiques douces à base de Fe est de 1,0 % en masse ou plus et de 20 % en masse ou moins.

**Revendications**

1. Cale magnétique (100, 200) comprenant :

   une pluralité de particules magnétiques douces à base de Fe (1), dans laquelle la pluralité de particules magnétiques douces à base de Fe (1) contient un élément M qui s'oxyde plus facilement que le Fe, et est liée entre elles par une phase d'oxyde superficielle (3, 5) contenant l'élément M, dans lequel l'élément M est au moins un élément choisi parmi le groupe constitué de Al, Si, Cr, Zr et Hf,
   la résistivité volumique de la cale magnétique est de 10 $\Omega \cdot$m ou plus, et la quantité de l'élément M contenue dans les particules magnétiques douces à base de Fe est de 1,0 % en masse ou plus et de 20 % en masse ou moins.

2. Cale magnétique (100, 200) selon la revendication 1, dans laquelle les particules magnétiques douces à base de Fe (1) sont des particules d'alliage à base de Fe-Al-Cr.

3. Cale magnétique (100, 200) selon la revendication 1 ou 2, dans laquelle un revêtement électriquement isolant est prévu sur une surface de celle-ci.

4. Machine électrique tournante utilisant la cale magnétique (100, 200) selon l'une quelconque des revendications 1 à 3.

5. Procédé de fabrication d'une cale magnétique (100, 200), le procédé comprenant:

   le mélange de particules magnétiques douces à base de Fe (1) contenant un élément M qui s'oxyde plus facilement que le Fe, et d'un liant pour former un mélange ;

FIG. 1

FIG. 2

FIG. 3

FIG. 4

FIG. 5

FIG. 6

| Mixing step:<br>Mix a Fe-based soft magnetic powder and a binder to form a mixture. | S11 |

⇩

| Pressure-molding step:<br>Pressure-mold the mixture into a molded body. | S12 |

⇩

| Heat-treatment step:<br>Heat-treat the molded body to form a consolidated body (magnetic wedge 100). | S13 |

# FIG. 7

| Mixing step:<br>Mix a Fe-based soft magnetic powder, a non-magnetic powder and a binder to form a mixture. | S21 |

⇩

| Pressure-molding step:<br>Pressure-mold the mixture into a molded body. | S22 |

⇩

| Heat-treatment step:<br>Heat-treat the molded body to form a consolidated body (magnetic wedge 200). | S23 |

# FIG. 8

FIG. 9(a)

FIG. 9(b)

FIG. 9(c)

FIG. 9(d)

FIG. 9(e)

FIG. 10

FIG. 11

FIG. 12

FIG. 13

FIG. 14

FIG. 15

FIG. 16

**EP 4 020 767 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6277030 A
- WO 2018008738 A
- EP 2947670 A1
- EP 2518738 A1